# EUROPÄISCHE PATENTSCHRIFT

(11) **EP 2 217 883 B1**
(45) Veröffentlichungstag und Bekanntmachung des Hinweises auf die Patenterteilung: **21.08.2013**
(21) Anmeldenummer: 08848516.4
(22) Anmeldetag: 22.10.2008
(51) Int. Cl.: G01C 21/36, G06F 3/023, B60K 35/00

(54) **VORRICHTUNG UND VERFAHREN ZUR ANZEIGE UND BEDIENUNG VON LISTEN**
DEVICE AND METHOD FOR THE DISPLAY AND OPERATION OF LISTS
DISPOSITIF ET PROCÉDÉ D'AFFICHAGE ET DE COMMANDE DE LISTES

(30) Priorität: 05.11.2007 DE 102007052613
(43) Veröffentlichungstag der Anmeldung: 18.08.2010
(73) Patentinhaber: Volkswagen Aktiengesellschaft, 38440 Wolfsburg (DE)
(72) Erfinder: KUHN, Mathias, 14129 Berlin (DE); HOFMANN, Gustav, 38114 Braunschweig (DE); HAUSCHILD, Frank, 10587 Berlin (DE)
(86) Internationale Anmeldenummer: PCT/EP2008/008904
(87) Internationale Veröffentlichungsnummer: WO 2009/059691

(56) Entgegenhaltungen:
- EP-A- 0 701 926
- WO-A-01/84483
- DE-A1- 10 025 126
- DE-A1- 10 205 642
- DE-A1- 10 242 378
- DE-A1-102005 022 196
- US-A1- 2007 155 369

## Beschreibung

Die Erfindung betrifft eine Vorrichtung und ein Verfahren zur Anzeige und Bedienung von Listen in einem Fahrzeug mit einer Verarbeitungseinrichtung, mindestens einer Bedieneinrichtung und einer Anzeigeeinrichtung zur Darstellung von Menüfeldern.

Insbesondere in Kraftfahrzeugen werden immer mehr Zusatzeinrichtungen eingebaut, die von der Mittelkonsole oder dem Armaturenbrett aus gesteuert werden sollen, wie beispielsweise Radios, Bord-Computer, Bord-Telefon, Navigationsgeräte, Einstelleinrichtungen für Sitze, Spiegel, Lenkrad, Überwachungsgeräte für Licht, Benzinstand, Reifendruck usw. Die Vielzahl von Einrichtungen mit ihren separaten Bedienungselementen sind an einem Armaturenbrett gegebener Größe nur noch schwer und mit erheblichen Kompromissen hinsichtlich der Bedienbarkeit unterbringbar. Als Folge davon müssen die Bedieneinrichtungen klein gehalten werden, was vielfach zu einer erheblichen Vielfalt von Bedienknöpfen, Bedientasten und Schaltern oft gleichartigen oder ähnlichen Aufbaus führt. Ein Fahrer des Kraftfahrzeuges ist damit nur schwerlich im Stande, die richtige Bedieneinrichtung an der richtigen Einrichtung zu betätigen ohne dass seine Aufmerksamkeit vom Verkehrsgeschehen abgelenkt wird.

Aus der DE 3104668 ist eine multifunktionale Bedieneinrichtung bekannt, welche die geschilderte Problematik zumindest mildert. Mehrere Zusatzeinrichtungen werden lediglich durch eine einzige Bedieneinrichtung gesteuert, die dazu eine Zifferneingabe, eine Funktionsgruppenumschaltung, Bedienelemente und eine Anzeigeeinheit sowie eine Schnittstelle für eine Elektronikeinheit aufweist. Die Bedienelemente werden hierzu über die Funktionsgruppen-Umschaltung einer bestimmten Einrichtung zugewiesen.

Aus der EP 0199916 B2 ist eine Bedieneinrichtung und Informationsausgabe zur Steuerung von mehreren in einem Fahrzeug eingebauten Zusatzeinrichtungen bekannt. Dabei werden ausgehend von einem Grundmenü einer größeren Anzahl von mechanischen Tasten über korrespondierende Anzeigefelder auf einem Display Grundfunktionen zugeordnet. Durch Betätigung der der gewünschten Grundfunktion zugeordneten Taste werden die Beschriftungen auf den Anzeigefeldern in die Beschreibung der zu dieser Grundfunktion gehörenden Unterfunktionen abgeändert, so dass nunmehr mit den mechanischen Tasten die Unterfunktionen der gewählten Grundfunktion ausgewählt werden können. Dieses bekannte System ist zwar recht flexibel, zur Auswahl der Funktionen oder Unterfunktionen, muss aber mehrmals aus der Fülle der zur Verfügung stehenden Tasten jeweils die richtige Taste betätigt werden. Nachteilig ist weiterhin, dass die Vielzahl der vorgesehenen Tasten einen erheblichen Raum einnehmen, so dass diese Tasten nicht an für deren Bedienung günstigen Stellen (Lenkrad, Mittelkonsole) im Fahrzeug angeordnet werden können.

Die Druckschrift DE 102 05 642 A1 beschreibt ein Verfahren zur Eingabe von Textzeilen oder Textblöcken über einen Cursor, insbesondere bei einem Multifunktionsdisplay in einem Kraftfahrzeug, wobei der Cursor in seiner Zeichen- und Charakterauswahl und seiner Zeichen- und Charakterplatzierung eine virtuelle Bewegung in zwei unabhängigen Achsrichtungen zulässt.

Die Druckschrift WO 01/84483 A1 beschreibt eine Vorrichtung nach dem Oberbegriff des Anspruchs 1 bzw ein Verfahren nach dem Oberbegriff des Anspruchs 14.

Die Aufgabe der Erfindung besteht darin, eine Vorrichtung zur Anzeige und Bedienung von Listen so auszugestalten, dass sie sehr einfach vom Fahrer bedient werden kann, ohne dass dieser dabei vom Verkehrsgeschehen abgelenkt wird, sowie ein entsprechendes Verfahren.

Die Lösung der Aufgabe wird durch die unabhängigen Patentansprüche 1 und 14 erreicht. Weltere vorteilhafte Ausführungen der Erfindung finden sich in den Unteransprüchen.

Ein wesentliches Merkmal der Erfindung besteht darin, dass ein Menüfeld, von denen sich bekannterweise mehrere auf einer Anzeigeeinrichtung befinden, bei Aktivierung in seiner Größe nicht oder nur unwesentlich ändert und dabei in ein Anzeigefeld und ein Eingabefeld unterteil wird. Wobei ein besonders erfinderisches Merkmal darin besteht, dass für die Eingabe von Zeichen keine Tastatur oder ein Bildschirm wie zum Beispiel ein Touch Screen benötigt wird, um die einzugebenden Zeichen zur Auswahl darzustellen, was zusätzlichen Bauraum, bzw. Darstellungsfläche In einem Fahrzeug erforderlich machen würde. In einem Kombiinstrument eines Fahrzeuges, welche üblicherweise über eine Anzeigeeinrichtung verfügt, ist der Darstellungsraum sehr begrenzt. Erfinderisch wird durch das Eingabefeld ein Zeichen zur Verfügung gestellt, dass über eine Bedieneinrichtung zum Beispiel im Lenkrad mittels eines Drehknopfes das Zeichen im Eingabefeld durch ein anderes ersetzt, um auf diese Weise eine Auswahl eines Zeichens zu ermöglichen.

Mit Zeichen sind hier alphanumerische, piktogrammförmige oder andersartig dargestellte Schriften, Symbole, usw. gemeint.

Ein weiteres wesentliches Merkmal der Erfindung besteht darin, dass die Eingabe von Informationen zur Bedienung der anzusteuernden Einrichtungen in einem Fahrzeug prinzipiell mit der gleichen Handhabung, geschieht wie das Auslösen von Funktionen, beispielsweise zur Ausgabe von Informationen an die anzusteuernden Einrichtungen. Es wird also z.B. ein alphanumerisches Zeichen zur Eingabe von Informationen in der gleichen Weise behandelt wie ein piktogrammförmiges Zeichen, zur Auslösung einer Funktion oder von Funktionen, beispielsweise zur Informationsausgabe oder Korrektur der Informationseingabe.

Ein weiteres wichtiges Merkmal der Erfindung besteht darin, dass in einem Eingabefeld durch wiederholtes Betätigen der mindestens einen Bedieneinrichtung die zur Eingabe zur Verfügung stehenden Informationen und/oder Funktionen schrittweise nacheinander zur Auswahl angeboten und damit zur Eingabe zur Verfügung gestellt werden. Soll eine Information oder eine Funktion tatsächlich eingegeben bzw. ausgelöst werden, so geschieht dies zum Beispiel durch eine Bestätigungstaste, durch welche die Auswahl der jeweiligen Information oder Funktion bestätigt wird. Auf diese Weise ist es möglich durch Betätigung von nur zwei Tasten einer Bedieneinrichtung beliebig viele Informationen einzugeben, beziehungsweise Funktionen auszulösen.

Ein anderes wichtiges Merkmal der Erfindung besteht darin, dass zu Beginn dem Fahrer eine an sich bekannte Auswahltabelle für Funktionen (Menü) angeboten wird, wobei die einzelnen Funktionen durch Menüfelder auf einer Anzeigeeinrichtung (z.B. einem Display) dargestellt werden. Entscheidet sich der Fahrer für eine bestimmte Funktion (z. B. Nummernwahl), so wird das zur Einleitung der Nummernwahl dienende Menüfeld aufgeteilt in ein Eingabefeld und ein Anzeigefeld, ohne dass sich hierdurch die Lage des entsprechenden Mehüfeldes ändert. Der Fahrer findet also das Anzeigefeld und das Eingabefeld an der gleichen Stelle vor wo vorher sich das zugeordnete Menüfeld befand. Ein Suchen nach der Lage des entsprechenden Anzeigefeldes und Eingabefeldes ist daher für den Fahrer nicht nötig. Vorteilhaft ist es, wenn das Menüfeld nach Aufteilung in ein Eingabe- und Anzeigefeld etwas größer dargestellt wird, ohne die anderen Menüfelder zu berühren.

Die erfindungsgemäße Vorrichtung und das erfindungsgemäße Verfahren sind nicht nur für Fahrzeuge anwendbar, sondern auch auf anderen geeigneten technischen Gebieten wie beispielsweise in der Telefontechnik, zum Beispiel Handys oder in der Computer-Technik.

An sich ist es denkbar in dem Eingabefeld alle sinnvollen Eingabeinformationen nacheinander anzubieten, so dass der Fahrzeugführer nur eine davon mittels der Bedieneinrichtung auswählen und damit ausgeben kann. Um die Zahl der nacheinander anzubietenden Informationen stark herabzusetzen, kann die Bedienungsperson sich die auszugebende Information aus nacheinander in das Anzeigefeld zu übernehmenden Zeichen zusammenstellen und schließlich die Ausgabe der komplettierten Information durch die Verarbeitungseinrichtung (z.B. eine Rechnereinrichtung) veranlassen.

Für die Arbeitsweise der erfindungsgemäßen Vorrichtung ist es wichtig, dass die Bedienungsperson erkennen kann, ob die Betätigung der Bedieneinrichtung tatsächlich ordnungsgemäß stattgefunden hat. Immerhin ist es denkbar, dass trotz einer korrekten Auswahl eines in das Anzeigefeld zu übernehmenden Zeichens, die Übernahme nicht geschieht, da beispielsweise die Kontakte der Bedieneinrichtung verschmutzt sind oder nicht fest genug zur Anlage kommen. Um hier Abhilfe zu schaffen wird die korrekte Übernahme der Zeichen vom Eingabefeld in das Anzeigefeld durch eine kurzzeitige Hervorhebung eines dieser Felder oder beider Felder erreicht.

Bei der erfindungsgemäßen Vorrichtung kann von einem Menü in ein Untermenü umgeschaltet werden in dem das zugehörige Menüfeld markiert und anschließend bestätigt wird. Dabei tritt in dem betreffenden Menüfeld der Titel des Untermenüs an die Stelle des Titels des übergeordneten Menüs. Gleichzeitig werden in den restlichen Feldern Informationen beziehungsweise Funktionen eingeschrieben, die zu dem Untermenü gehören. Besonders wichtig dabei ist, dass die Übergänge von einem übergeordneten Menü zu einem untergeordneten Menü, in animierter Form verlaufen können, das heißt, dass die betreffenden Informationen nicht schlagartig ausgewechselt werden, sondern fließend verlaufen. Das kann vielfach derart geschehen, dass das übergeordnete Menü mit seinen Informationen zum Beispiel In einer ersten Richtung aus der Anzeigeeinrichtung heraus verschwindet während das Untermenü anschließend in der gleichen Richtung in die Anzeigeeinrichtung hinein erscheint. Auf diese Weise kann der Betrachter den Wechsel der Menüs deutilch verfolgen. Wichtig dabei ist weiterhin, dass der Benutzer intuitiv erfassen kann, in welcher Richtung er sich innerhalb der verschiedenen Menüs bewegt, was die Bedienung erheblich erleichtert. Der Austausch der Menüs muss dabei nicht in waagerechter Richtung erfolgen, sondern kann auch senkrecht hierzu verlaufen oder auch in den Raum hinein, d.h. in die dritte Dimension.

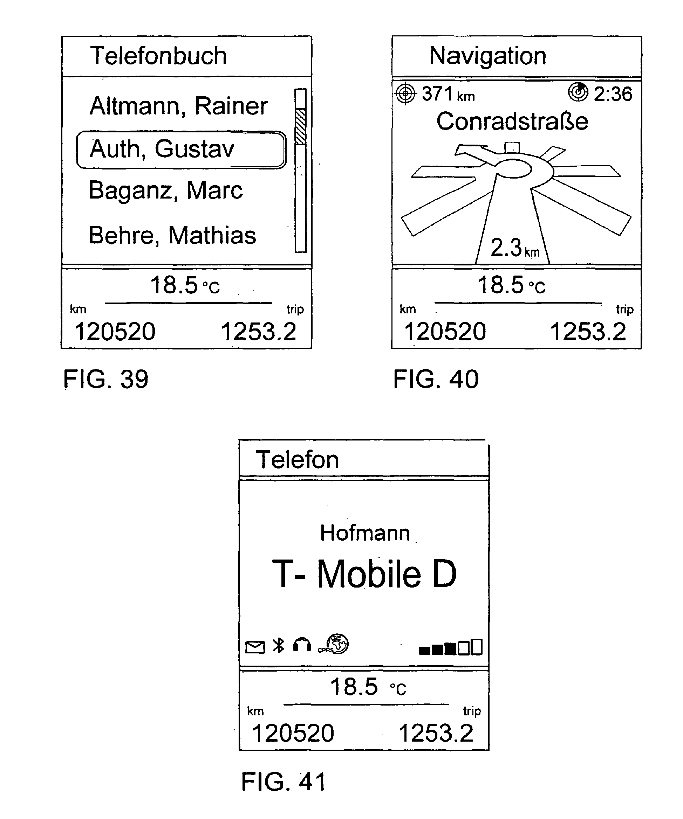

Dieses Prinzip ist durchgehend anwendbar, etwa wenn in Figur 40 und Figur 41 ein Übergang von dem übergeordneten Menü " Navigation" auf das übergeordnete Menü " Telefon " stattfindet. Dabei wird in diesen übergeordneten Menüs der augenblickliche Zustand beziehungsweise die Funktionen der zugeordneten Einrichtungen beschrieben, so dass der Benutzer beispielsweise während eines Telefongespräches mit einem Teilnehmer" Hoffmann " umschalten kann auf "Navigation ", um während des Telefongesprächs sich über den Verlauf des demnächst einzuschlagenden Weges zu informieren.

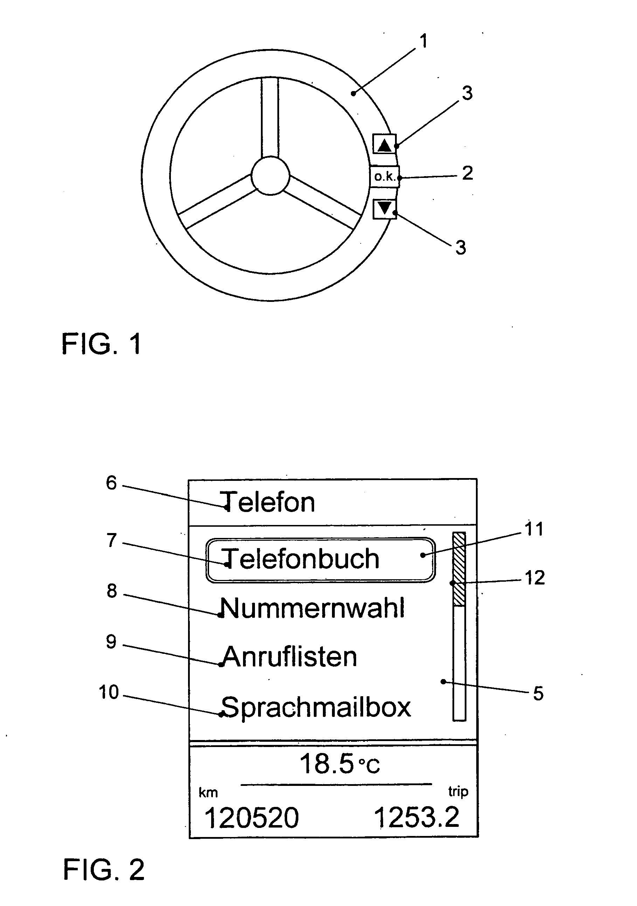

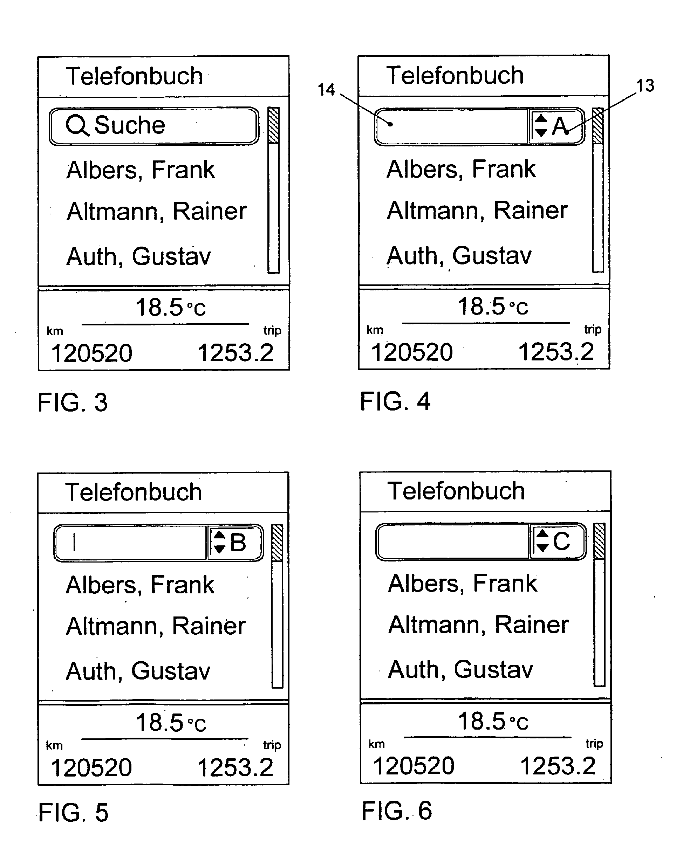

In Figur 2 ist beispielsweise das übergeordnete Menü " Telefon " dargestellt. Durch die Markierung und Betätigung des Untermenüs "Telefonbuch ", tritt dieses Untermenü, wie in Figur 3 gezeigt, an die Stelle des übergeordneten Menüs. Dabei gehören zu dem Untermenü sowohl eine Funktion " Suche " als auch ein Ausschnitt einer Liste von Telefonteilnehmern (Figur 3), die mittels der Bedieneinrichtung schrittweise markiert und gegebenenfalls bestätigt werden können.

Weiter oben ist schon erläutert worden, dass ein wesentliches Merkmal der vorliegenden Erfindung darin besteht, dass mit der gleichen Handhabung sowohl Informationen eingegeben als auch eine oder mehrere Funktionen ausgelöst werden.

Dabei wird die Funktion in Form von mindestens einem Piktogramm behandelt, während die Informationen durch alphanumerische Zeichen gebildet werden. Beide Arten von Zeichen werden bei der erfindungsgemäßen Vorrichtung prinzipiell gleichartig eingegeben. Um die Zahl der in dem Eingabefeld anzubietenden Informationen herabzusetzen, werden diese Informationen schrittweise aus Zeichen zusammengesetzt die durch Betätigung der Bedieneinrichtung nacheinander in dem Eingabefeld angeboten werden. Im Ergebnis werden also die Piktogramme und die einzelnen alphanumerischen Zeichen hinsichtlich der Handhabung bei der Eingabe gleichartig behandelt.

Im Rahmen der Erfindung können als Zeichen nicht nur Funktionen kennzeichnende Piktogramme sondern auch komplizierte Schriftzeichen wie chinesische Schriftzeichen, Zeichen einer Bilderschrift und ähnliches verwendet werden. Entsprechend der Weiterbildung der Erfindung empfiehlt es sich aber die auszugebenden Informationen aus alphanumerischen Zeichen im Anzeigefeld zusammenzusetzen.

Die Erfindung in macht in ihrer Weiterbildung möglich, dass die Funktion der Korrektur der zumindest in Teilen in das Anzeigefeld eingegebenen Information und der Verarbeitung der schließlich komplettierten Information im Anzeigefeld ohne zusätzliche Tasten durchgeführt werden können. Hierzu wird über die Bedieneinrichtung das Zeichen der entsprechenden Funktion in das Eingabefeld transportiert und dort durch die Bedieneinrichtung aktiviert. Damit bewirkt die Bedieneinrichtung nicht nur die Übernahme von alphanumerischen Zeichen aus dem Eingabefeld in das Anzeigefeld sondern auch die Durchführung von in dem Eingabefeld durch Piktogramme symbolisch angezeigte Funktionen. Als Funktionen können dabei eine Korrekturfunktion, eine Abbruchfunktion bzw. eine Ausgabefunktion dienen. Mit der Ausgabefunktion kann die Anweisung gegeben werden, die in dem Anzeigefeld befindliche Information nunmehr zu verarbeiten, was primär durch eine Ausgabe dieser Information an eine verarbeitende Einheit geschehen kann. Mit Hilfe der Korrekturfunktion ist es möglich, bereits in das Anzeigefeld übernommene Zeichen wieder zu löschen.

In Abhängigkeit von der sich aus dem jeweils markierten Menüfeld ergebenden Grundfunktion (z. B. Telefonbuch oder Nummernwahl) kann in Weiterbildung der Erfindung durch die Bestätigung der Ausgabe-Funktion ein unterschiedlicher Programmablauf folgen. Sind beispielsweise die in dem Anzeigefeld angesammelten alphanumerischen Zeichen derart komplett, dass hiermit die gewählte Grundfunktion zur Gänze erledigt werden kann, so können parallel zur Verarbeitung der komplettierten Information wieder die zu Beginn gezeigten Menüfelder dargestellt werden, wie sie im Anfangszustand der Vorrichtung gezeigt wurden.

Reicht die in das Anzeigefeld übertragene Information noch nicht zu einer abschließenden Bearbeitung aus (z. B. bei der Grundfunktion " Telefonbuch" gibt es in der entsprechenden Liste mehrere Teilnehmer, auf die die in dem Anzeigefeld befindliche Information zutrifft), so können entweder nur deren Namen angezeigt werden oder aber auch ein Ausschnitt aus einer alphabetisch sortierten Teilnehmerliste, der mit der in dem Anzeigefeld befindlichen Buchstabenkombination beginnt. Hierzu werden Menüfelder der Grundfunktion entsprechend überschrieben.

Hinsichtlich der Grundfunktion "Nummernwahl " kann analog vorgegangen werden. Ist die in das Anzeigefeld eingegebene Nummer komplett (beispielsweise weil die Anzahl der notwendigen Ziffern erreicht ist oder weil eine identische Nummer in einem Nummernspeicher der anrufbaren Teilnehmer im Fahrzeug gespeichert ist) so kann wieder das Menü der Grundfunktionen erscheinen, ist die Nummer aber nicht komplett, so können nur Nummern aus einer Nummernliste angezeigt werden, auf die die eingegebenen Zeichen im Anzeigefeld zutreffen oder aber es wird ein Ausschnitt aus einer nach Zahlen sortierten Nummernliste angezeigt, der mit den in dem Anzeigefeld befindlichen Ziffern beginnt.

Während regelmäßig die Ausgabe der in dem Anzeigenfeld gespeicherten alphanumerischen Zeichen durch Eingabe einer entsprechenden Funktion ("ok"; " Ausgabefunktion ") und Aktivierung dieser Funktion durch die Bedieneinrichtung geschieht, kann dieses Verfahren verkürzt werden. Danach geschieht die Ausgabe selbsttätig, wenn eine hinreichend große Wahrscheinlichkeit besteht, dass die in dem Anzeigefeld befindliche Information komplett ist. Das kann beispielsweise dann geschehen, wenn die im Anzeigefeld befindliche Telefonnummer sich in einem entsprechenden Speicher des Fahrzeugs befindet oder ihre Stellenzahl (Anzahl der Zeichen) hinrelchend groß ist oder die erfindungsgemäße Vorrichtung eine Notrufnummer erkennt. Für das " Telefonbuch gilt analog das Gleiche. Andere Möglichkeiten zur Verkürzung des Ausgabeverfahrens können darin bestehen, dass statt einer selbsttätigen Ausgabe (nach einer neuerlichen Eingabe eines alphanumerischen Zeichens) primär immer wieder in dem Eingabefeld die zugehörige Ausgabefunktion selbsttätig angeboten wird, so dass diese nicht erst durch mehrmaliges Betätigen der Bedieneinrichtung in das Eingabefeld eingebracht werden muss.

Eine ähnliche Verkürzung durch die Vorrichtung lässt sich auch bei der Ausgabe von Informationen wie folgt erreichen. Dabei wird für den Fall, dass die Wahrscheinlichkeit für eine komplette Information in dem Anzeigefeld sehr groß ist, durch ein hinreichend langes Betätigen der Bedieneinrichtung eine Ausgabe der Information aus dem Anzeigefeld veranlasst und die ausgegebene Information wird (beispielsweise durch den Aufbau eines Telefonanrufes) verarbeitet.

Wiederum eine ähnlich vorteilhafte Verkürzung durch die Vorrichtung lässt sich dadurch erreichen, dass für den Fall, dass die Wahrscheinlichkeit für eine komplette Information in dem Anzeigefeld sehr groß ist, die Ausgabefunktion in dem Eingabefeld direkt neben das zuletzt ausgelesene Zeichen gelegt wird. Damit wird sichergestellt, dass bei Betätigung der Bedieneinrichtung als erstes die Ausgabefunktion in dem Eingabefeld angeboten wird. Soweit es die Bedieneinrichtung erlaubt in dem Eingabefeld in beiden Richtungen (nach oben und unten) zu suchen, wird dann die Ausgabefunktion zu beiden Seiten des zuletzt ausgegebenen Zeichens gelegt.

Für den Fall dass der Benutzer der erfindungsgemäßen Vorrichtung eine fehlerhafte Eingabe feststellt, kann durch Auswählen und Bestätigen der Korrekturfunktion das letzte der eingegebenen Zeichen gelöscht werden. Ist damit der Fehler noch nicht beseitigt, lässt sich dieser Vorgang wiederholen. Da nach der Betätigung der Bedieneinrichtung in der Regel das zuletzt in dem Eingabefeld befindliche Zeichen, (im vorliegenden Fall also das Piktogramm für die Korrekturfunktion) stehen bleibt, braucht zum Löschen weiterer Zeichen in dem Anzeigefeld jeweils nur nochmals die Bedieneinrichtung betätigt zu werden.

Es ist besonders vorteilhaft, wenn die Bedieneinrichtung beispielsweise ein Drehschalter ist, dessen Drehknopf nicht nur in die beiden Drehrichtungen betätigt werden, sondern auch noch in Längsrichtung der Drehachse eingedrückt werden kann und so als Bestätigungstaste dient. Auch eine Walzentaste mit Druckfunktion ist in diesem Sinne einsetzbar.

An sich ist es möglich, ausgehend von den in den Menüfeldern angezeigten. Grundfunktionen, durch Auswahl einer bestimmten Grundfunktion z. B. " Telefonbuch " in diesem Menüfeld die Darstellung der Grundfunktion unmittelbar durch ein Anzeigefeld und ein Eingabefeld zu ersetzen. Vielfach ist es aber nun so, dass der Umfang des Telefonbuches relativ klein ist, so dass es sich empfehlen kann, die Telefonliste schrittweise direkt zu durchsuchen anstatt eine Suchfunktion mittels des Eingabefeldes und des Anzeigefeldes durchzuführen. Dem Benutzer steht somit durch Betätigen der Bedieneinrichtung die Möglichkeit offen, wahlweise die Suchfunktion selbst oder aber eine der zu dem betreffenden Menüfeld gehörenden Information direkt auszuwählen. Im vorliegenden Beispiel sind dies die in das Telefonbuch eingetragenen Namen. Die Auswahl geschieht nach der bei der erfindungsgemäßen Vorrichtung durchgängigen Prozedur der Markierung eines Feldes mittels der Bedieneinrichtung und der anschließenden Bestätigung durch die Bedieneinrichtung.

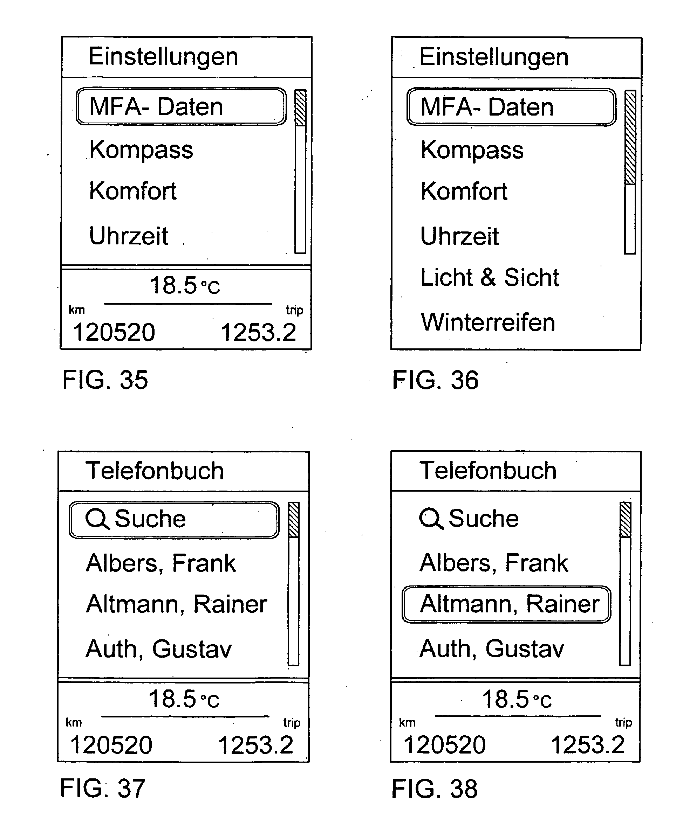

Gemäß einer Weiterbildung der Erfindung kann ein Teil der Menüfelder dauerhaft für wesentliche Informationen reserviert sein. So ist es zum Beispiel für den Fahrer eines Fahrzeugs wichtig, jederzeit die augenblicklich gefahrener Geschwindigkeit oder die Außentemperatur (mögliches Glatteis) zu kennen. Für den Fall, dass ein Fahrzeug derart langsam fährt, dass derartige Informationen für die Sicherheit des Fahrzeugs nicht mehr relevant sind (zum Beispiel Fahrt mit einer Geschwindigkeit unter sechs Kilometer pro Stunde) können die reservierten Felder zur Anzeige anderer Informationen freigegeben werden, um z. B. bei der Ansicht nach Figur 36 weitere Menüfelder anzeigen zu können.

Die Aufgabe wird ferner durch ein Verfahren in einem Fahrzeug mit einer Verarbeitungseinrichtung, mindestens einer Bedieneinrichtung und einer Anzeigeeinrichtung zur Darstellung von Menüfeldern gelöst, wobei bei Aktivierung eines Menüfeldes dieses als Eingabe- und Anzeigefeld dargestellt wird, wobei im Eingabefeld ein Zeichen einer Liste von mehreren Zeichen dargestellt ist und bei Betätigung der Bedieneinrichtung das Zeichen durch ein anderes Zeichen ersetzt wird und durch Betätigung der Bedieneinrichtung in das Anzeigefeld übernommen wird und/oder eine Funktion über beziehungsweise in der Verarbeitungseinrichtung auslösbar ist oder ausgelöst wird.

Es ist vorteilhaft, dass durch eine hinreichend lange Betätigung beispielsweise einer Aktivierungstaste einer Bedieneinrichtung, die Ausgabefunktion ausgelöst wird.

Erfindungsgemäß wird ein Teil der Felder der Anzeigeeinrichtung dauerhaft oder abhängig von der aktuellen Geschwindigkeit des Fahrzeugs für wesentliche Informationen wie der Außentemperatur, der Innentemperatur, der gefahrenen Kilometer, u.s.w. reserviert wird.

Andere vorteilhafte Weiterbildungen der Erfindung ergeben sich aus den Unteransprüchen.

Zwei Ausführungsbeispiele der Erfindung werden nachfolgend an Hand der Zeichnung dargestellt. Daran zeigt
Figur 1 und Fig. 42 in vereinfachter Darstellung eine an einem Lenkrad angebrachte Tastatur der Vorrichtung
Figur 2 bis Figur 13 einzelne Ansichten der Anzeigeeinrichturig bei der Durchführung einer Suchfunktion hinsichtlich der Grundfunktion "Telefonbuch" mittels der erfindungsgemäßen Vorrichtung
Figur 14 bis Figur 34 einzelne Ansichten der Anzeigeeinrichtung bei der Durchführung einer Eingabefunktion hinsichtlich der Grundfunktion "Nummemwahl " mittels der erfindungsgemäßen Vorrichtung und Figur 35 bis Figur 41 einzelne Ansichten der Anzeigeeinrichtung bei der Durchführung weiterer Funktionen.

In Figur 1 ist ein Lenkrad 1 dargestellt, an dem eine Bedieneinrichtung mit einer Bestätigungstaste 2 und weiteren tasten 3,4 eingebracht ist.

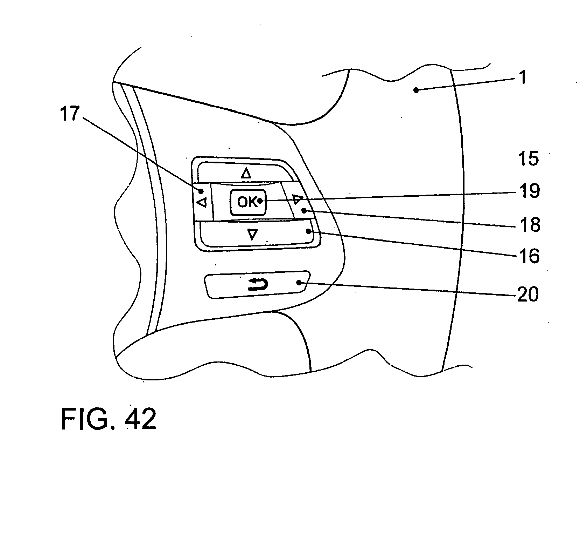

Figur 42 zeigt eine zweite Bedieneinrichtung 15,16, 17,18, die an einem Lenkrad 1 befestigt ist, wobei die Tasten 15,16 der Tasten 3,4 in Figur 1 entsprechen und geeignet sind, Felder beziehungsweise Menüfelder in senkrechter Richtung aufwärts und abwärts schrittweise zu markieren. Eine Bestätigungstaste 19 in Figur 42 entspricht der Bestätigungstaste 2 in Figur 1, mit Hilfe derer die Durchführung von Funktionen oder Ausgabe von Informationen eines gerade markierten Menüfeldes erreicht werden kann.

Der Unterschied der zweiten Bedieneinrichtung 15 bis 18 gegenüber der ersten Bedieneinrichtung 3,4 besteht im Wesentlichen darin, dass mit Hilfe der Tasten 17,18 auch eine Verschiebung in einer horizontalen zweiten Richtung quer zu der senkrecht verlaufenden ersten Richtung vorgenommen werden kann. Dies kann beispielsweise dazu dienen, in horizontaler Richtung die in den Figuren 40 und 41 dargestellten Hauptmenüs anzusprechen. Weiterhin ist in Figur 42 eine Zurück-Taste 20 vorgesehen, mit deren Hilfe der jeweils vorangegangene Schritt rückgängig gemacht werden kann oder aus dem untergeordneten Menü in ein übergeordnetes Menü zurückgekehrt werden kann.

Figur 2 zeigt eine Anzeigeeinrichtung 5, auf dem fünf Menüfelder einschließlich der zugehörigen Beschriftung dargestellt sind. Das oberste Menüfeld 6 beschreibt die zu steuernde Einrichtung in einem Fahrzeug, in diesem Falle das Telefon. Die Darstellung nach Figur 2 kann ein Untermenü eines übergeordneten Menüs seien, durch welches eines von mehreren ansteuerbaren Einrichtungen im Fahrzeug ausgewählt werden kann. Die Anzeigeeinrichtung ist an für den Fahrer gut sichtbarer Stelle im Fahrzeug angebracht, beispielsweise am Armaturenbrett, es kann aber auch in der Windschutzscheibe sichtbar sein (Head up Display; HUD).

Das Menü nach Figur 2 beschreibt vier Grundfunktionen für das Telefon, von denen die Grundfunktion " Telefonbuch " schon beim Öffnen dieses Menüs durch eine hervorstehende tastenförmige Umrahmung 11 hervorgehoben ist. Damit sind die fünf Menüfelder 6 bis 10 belegt.

Der Benutzer der erfindungsgemäßen Vorrichtung hat nun die Möglichkeit, durch Betätigen der Taste 4 der Bedieneinrichtung schrittweise eines der drei nicht markierten Grundfunktionen zu markieren und dann durch die Betätigung der Bestätigungstaste 2 der Bedieneinrichtung auszuwählen. In dem hier beschriebenen Beispiel macht der Benutzer von dieser Möglichkeit keinen Gebrauch, sondern bestätigt durch Drücken der Bestätigungstaste 2, dass er die Grundfunktion "Telefonbuch" nutzen will.

Ein wesentlicher Vorteil der vorliegenden Erfindung besteht darin, dass der Aufbau und die Einteilung der Felder hinsichtlich der Darstellung auf der Anzeigeeinrichtung 5 abgesehen von der Beschriftung, sich nicht ändern. Dadurch bleibt die Anzeigeeinrichtung sehr übersichtlich. Dementsprechend haben die in den Figuren 2 und 4 angegebenen Bezugszeichen durchgehend ihre Gültigkeit und werden somit in den übrigen Figuren weggelassen.

Figur 3 zeigt die Darstellung auf der Anzeigeeinrichtung 5 nach der Betätigung durch die Bestätigungstaste 2. Dabei wird dem Benutzer mittels einer entsprechenden Beschriftung in dem Menüfeld 7 eine Suchfunktion angeboten. Gleichzeitig hat der Benutzer aber auch die Möglichkeit durch Betätigung der Taste 4 schrittweise einen der zusätzlich angezeigten Namen von Telefonteilnehmern zu markieren und durch Betätigung der Bestätigungstaste 2 auf den markierten Namen direkt zuzugreifen. Dieser Möglichkeit des direkten Zugriffs wird der Benutzer in der Regel dann wählen, wenn das Telefonbuch (noch) relativ klein ist. Um bei vergleichsweise vielen Einträgen in das Telefonbuch und beschränkter Anzahl von sichtbaren Feldern alle Teilnehmer markieren und gegebenenfalls bestätigen zu können, kann die Teilnehmerliste gerollt bzw. gescrolled werden.

Es ist möglich, die einzelnen Namen der Teilnehmer durch die Taste 4,16 in einer in Figur 37 beispielsweise nach unten gerichteten ersten Richtung schrittweise zu markieren. Ist der gesuchte Name in dem in Figur 37 gezeigten Abschnitt nicht gezeigt, so wird beispielsweise beim Erreichen des Namens "Auth" am Ende des gezeigten Abschnitts die Liste in vorzugsweise animierter Form derart entgegen der ersten Richtung in einer zweiten Richtung nach oben verschoben, dass ein zweiter Abschnitt der Liste mit weiteren Teilnehmern sichtbar wird. Dieser Wechsel des Listenabschnitts kann ruckartig geschehen oder aber bevorzugt als sich bewegender animierter Übergang, bei dem der Betrachter den Eindruck erhält, dass die Liste sich um einen Abschnitt nach oben verschiebt.

Die erfindungsgemäße Vorrichtung lässt es weiterhin zu, dass die einzelnen Listenabschnitte sich einander überlappen, wie dies im Zusammenhang mit Figur 38 und Figur 39 dargestellt ist. Beim Erreichen und Markieren des Namens " Auth" werden die mit Namen belegten Felder nicht komplett mit neuen Namen beschrieben, sondern die zwei letzten Namen des vorangegangenen Abschnittes erscheinen am oberen Ende des neuen Abschnittes.

Ist der gesuchte Teilnehmer nicht unter den direkt angezeigten drei Namen, so besteht somit die Möglichkeit durch entsprechendes Betätigen der Bedieneinrichtung 4 schrittweise die Namensliste hochzuziehen und einen dann gefundenen Namen zu markieren. Über die Größe der Namensliste und den Ort, an dem sich der Benutzer in der Liste augenblicklich befindet, gibt ein sich auf der Anzeigeeinrichtung 5 senkrecht verschiebender Balken 12 durch seine Länge und Lage Auskunft. In dem vorliegenden Beispiel hat sich der Benutzer entschieden, die Suchfunktion durch Betätigen der Bestätigungstaste 2 zu benutzen und sieht daraufhin die in Figur 4 dargestellte Ansicht. Gegenüber Figur 3 wurde in Figur 4 das Feld mit der Suchfunktion durch zwei kleinere Felder ersetzt, nämlich ein Eingabefeld 13 und ein Anzeigefeld 14. Über das Eingabefeld 13 wird dem Benutzer die Eingabe des Buchstabens "A" angeboten, wobei er dieses Angebot durch Betätigen der Bestätigungstaste 2 annehmen kann, wodurch dann der Buchstabe "A" an die erste Stelle des Anzeigefeldes 14 übertragen würde.

Das Eingabefeld 13 in Verbindung mit den Tasten 3,4 verhält sich so, als ob die in dem Eingabefeld 13 angebotenen Informationen sich untereinander auf einem in sich geschlossenen Band befinden, welches durch Betätigung der Tasten 3,4 in beiden Drehrichtungen schrittweise bewegt werden kann. In dem Eingabefeld 13 sind die zwei Bewegungsrichtungen durch zwei entsprechende kleine Pfeile angedeutet. Es bleibt somit dem Benutzer überlassen in welcher Richtung er das nächste in das Anzeigefeld 14 zu übertragende Zeichen sucht. Im vorliegenden Fall wird angenommen, dass die Buchstaben in Abwärtsrichtung ansteigend sortiert sind, wie dies auch hinsichtlich der angezeigten Namen der Fall ist.

Die Darstellung eines Teiles der Namen aus einer Namensliste wird durch den Übergang auf die Suchfunktion nicht berührt. Da sich die erfindungsgemäße Vorrichtung nunmehr im Modus der Suchfunktion befindet, ist ein direkter Zugriff auf die Namen allerdings nicht mehr möglich, da hierzu erst die Suchfunktion verlassen werden muss.

Im vorliegenden Fall wird nun angenommen, dass der Benutzer durch Betätigen der Taste 4 sich die Buchstaben "A" und "B" anzeigen lässt, ohne diese durch Betätigung der Bestätigungstaste 2 in das Anzeigefeld 14 zu übertragen. Dies ist in den Figuren 4 und 5 dargestellt.

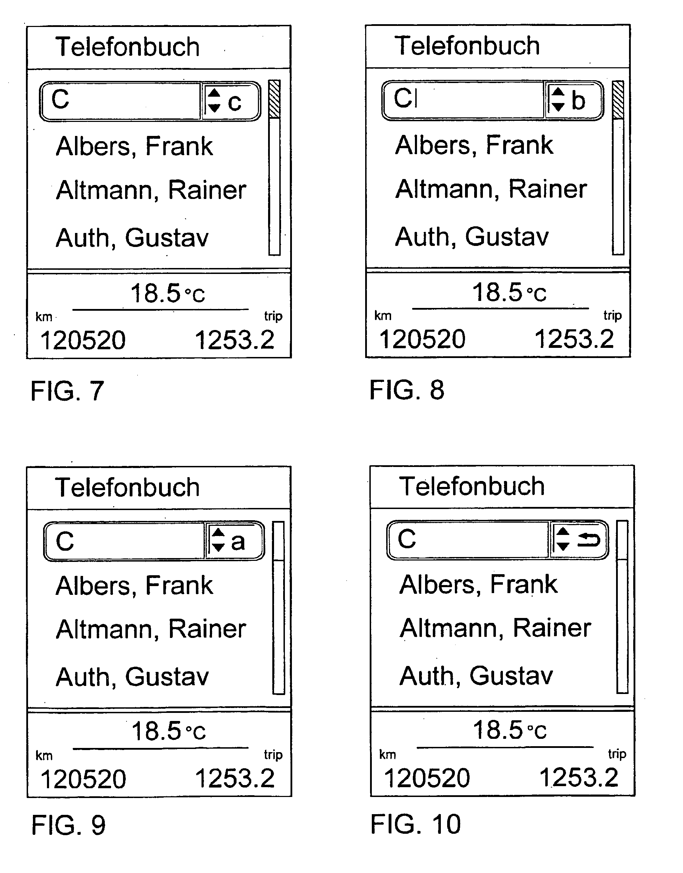

Durch einen weiteren Druck auf die Bestätigungstaste 2 erscheint im Eingabefeld 13 der Buchstabe "C", den der Benutzer in das Anzeigefeld 14 übertragen möchte, da er einen Telefonteilnehmer sucht, der mit dem Buchstaben "C" beginnt. Dementsprechend drückt er bei Ansicht von Figur 6 die Bestätigungstaste 2 (siehe Figur 1) und gelangt somit zu der Ansicht nach Figur 7. Durch nochmaliges Drücken der Bestätigungstaste 2 könnte er ein weiteres Mal einen Buchstaben "C" in das Anzeigefeld übertragen, da aber die Namen, bis auf den Anfangsbuchstaben, in dem Telefonbuch klein geschrieben werden, wird in dem Eingabefeld 13 nach der Übertragung von "C" ein kleiner Buchstabe "c" bereit gestellt. Entsprechendes gilt für alle anderen Buchstaben.

Es wird angenommen, dass der Benutzer nunmehr die Suche nur mit dem Buchstaben "C" durchführen will, was durch eine Funktion geschehen kann, die in dem Eingabefeld 13 durch das Symbol "ok" gekennzeichnet ist. Da der Benutzer gelemt hat, dass die Funktionen oberhalb des Buchstabens "A" liegen, bewegt er sich in dem Eingabefeld 13 durch Betätigen der Taste 3 schrittweise nach oben, wodurch in dem Eingabefeld nacheinander die Buchstaben "b" und "a" erscheinen wie in den Figuren 8 und 9 gezeigt ist.

Durch weiteres Betätigen der Taste 3 erscheint als erste Funktion die Abbruchfunktion, welche durch einen die Richtung um 180 °wechselnden, nach links gerichteten Pfeil gekennzeichnet ist (Figur 10). Da der Benutzer nicht die Suchfunktion abbrechen möchte, verzichtet er hier auf die Betätigung der Bestätigungstaste 2 und betätigt erneut die Taste 3, worauf ein Piktogramm erscheint, welches auf eine mögliche Korrekturfunktion verweist. Dieses Programm bzw. Funktion ist durch einen in Richtung Anzeigefeld 14 gerichteten hohlen Pfeil dargestellt, in den ein "x" eingetragen ist.

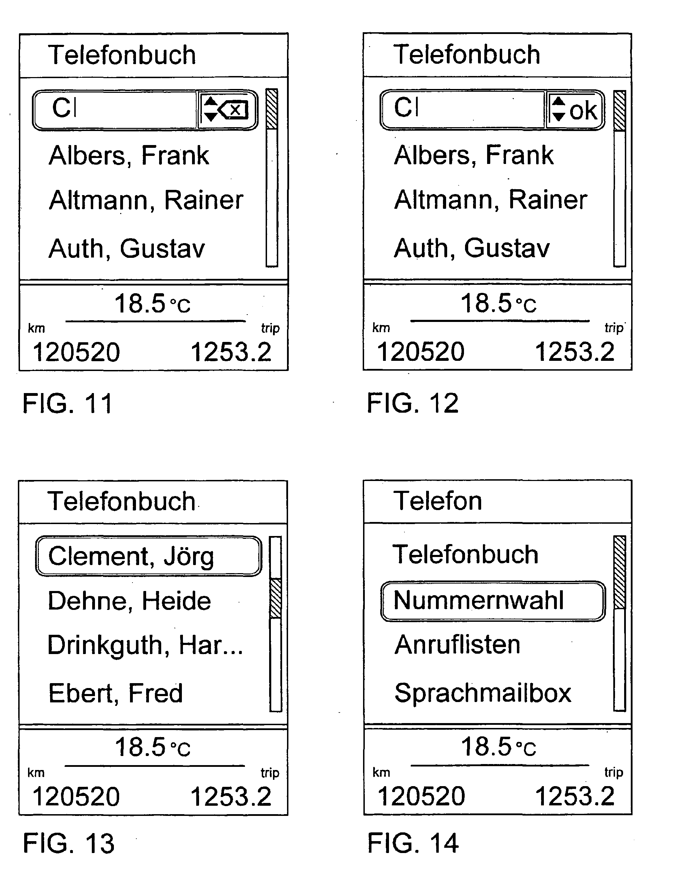

Da der Benutzer nicht die Eingabe im Anzeigefeld 14 korrigieren möchte, unterlässt er es hier, die Bestätigungstaste 2 zu drücken und betätigt stattdessen erneut die Taste 3, woraufhin die von ihm gewünschte Ausgabefunktion erscheint (Figur 12), die der Benutzer bestätigt. Als Folge davon werden vier Namen von Telefonteilnehmem in die Menüfelder 7 bis 10 (siehe Figur 2) eingetragen, wobei der oberste der erste Teilnehmername ist, der mit "C" beginnt. Dieser Name ist wiederum durch einen Rahmen hervorgehoben und somit markiert, so dass auf ihn durch Betätigung der Bestätigungstaste 2 direkt zugegriffen werden kann. Wie weiter oben schon erläutert, kann durch entsprechende Betätigung der Tasten 3 und 4 jeder Name des Telefonbuches markiert und durch Betätigung der Bestätigungstaste 2 ausgewählt werden. Danach nimmt die Anzeigeeinrichtung 5 wieder das Aussehen gemäß Figur 2 an.

Bei dem in Fig. 13 dargestellten Zustand ist die Suche schon erfolgt. Der Cursor hat sich nach der Bestätigung vom Suchfeld animiert zum ersten Listeneintrag der mit "C" beginnt, bewegt. Durch Drücken von "ok" würde ein Rufaufbau erfolgen.

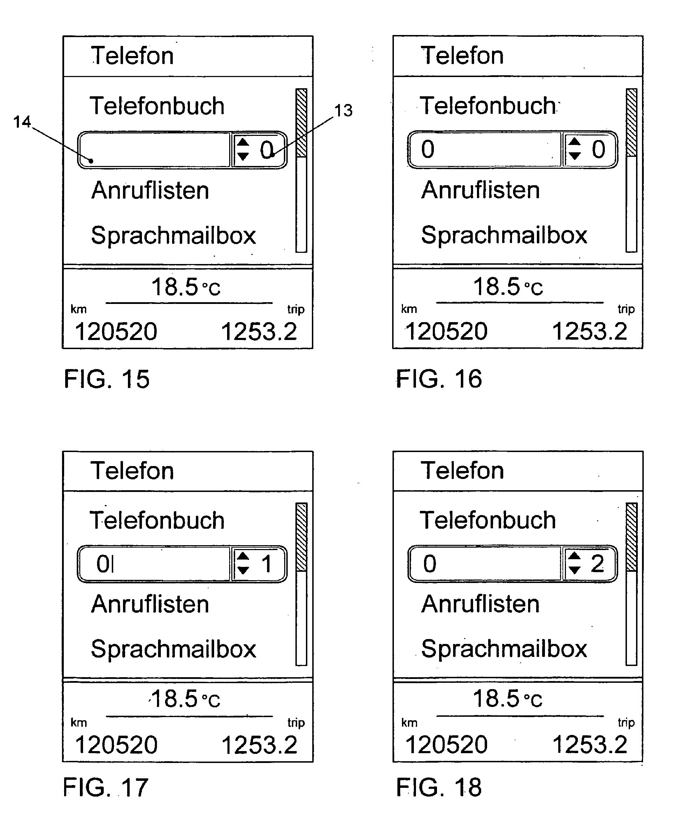

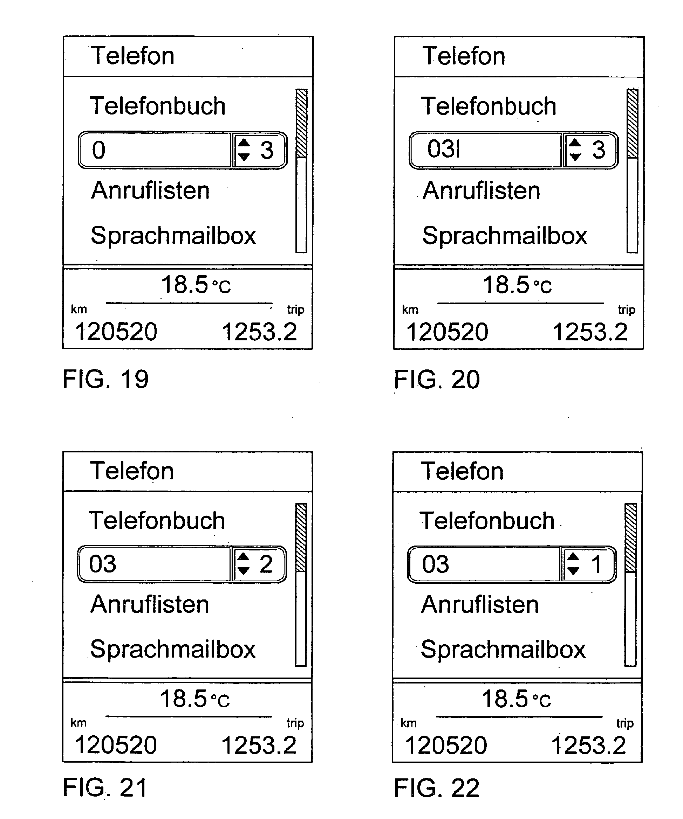

Es wird nunmehr angenommen, dass der Benutzer eine Nummernwahl durchführen möchte. Ausgangspunkt ist wiederum die Darstellung auf der Anzeigeeinrichtung 5 entsprechend der Figur 2. Als erstes betätigt der Benutzer die Taste 4 und markiert so das Menüfeld 8 mit der "Nummerwahl" (Figur 15). In dem Eingabefeld 13 wird am Anfang regelmäßig die Ziffer "0" angeboten. Da der Benutzer eine Nummer wählen möchte die mit "0" beginnt, betätigt er die Bestätigungstaste 2, woraufhin eine Null in das Anzeigefeld 14 übertragen wird (siehe Figur 16). Als nächstes möchte der Benutzer eine "3" in das Anzeigefeld 14 übernehmen und er betätigt dementsprechend die Taste 4 solange (Figur 17 und Figur 18), bis in dem Eingabefeld 13 eine "3" erscheint (siehe Figur 19). Durch Betätigen der Bestätigungstaste 2 wird die gewünschte "3" in das Anzeigefeld 14 übertragen (Figur 20).

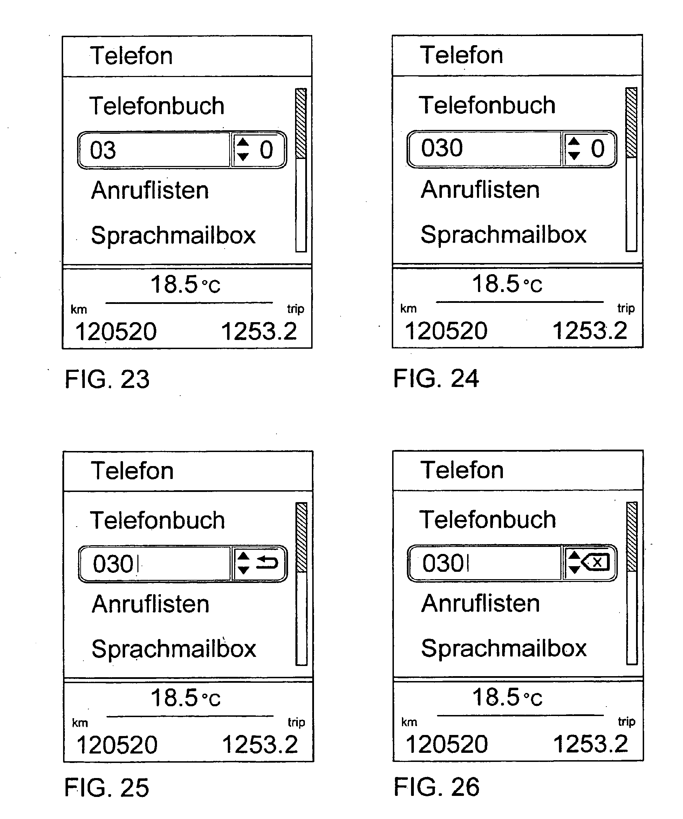

Als nächstes möchte der Benutzer eine "0" in das Anzeigefeld 14 übertragen. Da er weiß, dass die "0" in Aufwärtsrichtung unmittelbar vor den Funktionen liegt, drückt er die Taste 3 so oft (siehe Figur 21 bis 24) bis die gewünschte "0" in dem Eingabefeld 13 steht (Figur 23). Anschließend wird die Null durch Betätigen der Bestätigungstaste 2 in das Anzeigefeld übernommen (siehe Figur 24).

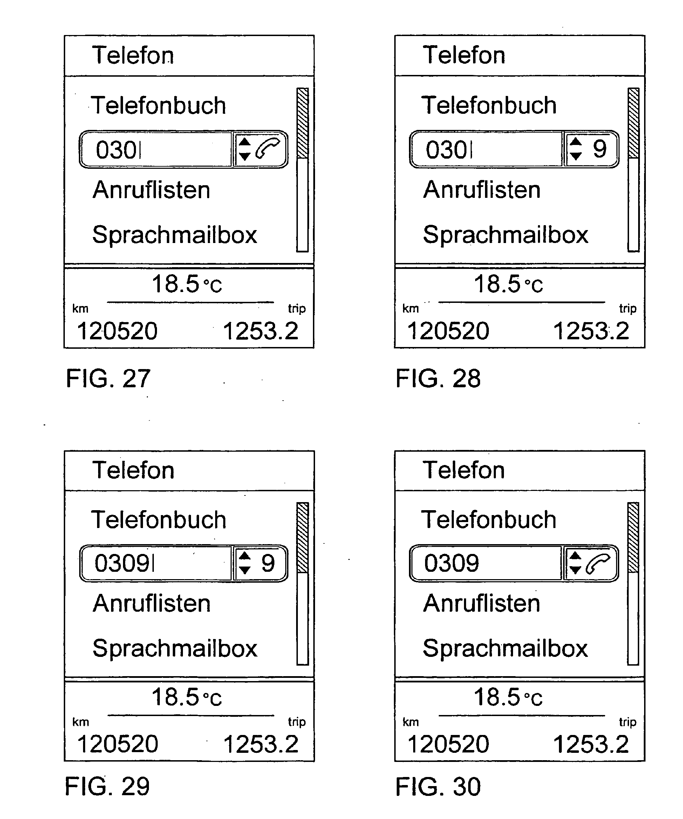

Anschließend möchte der Benutzer eine "9" eingeben. Da er weiß, dass die "9" in Abwärtsrichtung unmittelbar vor den Funktionen liegt und er die Tasten 3,4 möglichst wenig bedienen möchte, sucht er die gewünschte " 9 " in Aufwärtsrichtung hinter den Funktionen durch Betätigung der Taste 3. Somit drückt er die Taste 3 so oft (siehe Figur 21 bis 24) bis er die Funktionen (Abbruchfunktion Figur 25; Korrekturfunktion Figur 26; Ausgabefunktion beziehungsweise Telefonanruf, Figur 27) in Aufwärtsrichtung passiert hat und die gewünschte "9" in dem Eingabefeld 13 steht (Figur 28). Durch Betätigung der Bestätigungstaste 2 wird die " 9 " in das Anzeigefeld übernommen (Figur 29).

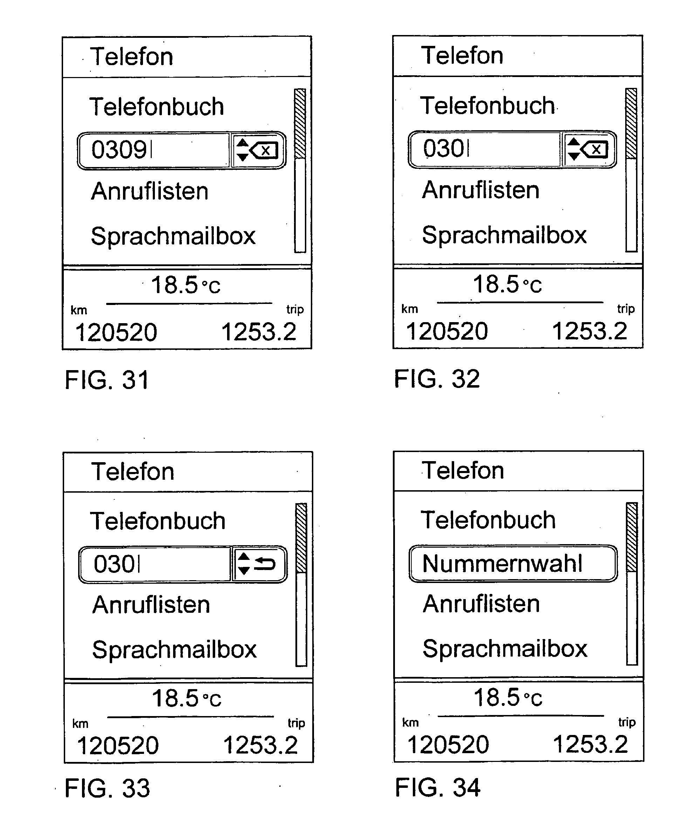

Es wird nunmehr unterstellt, dass der Benutzer die zuletzt in das Anzeigefeld eingegebene " 9 " löschen möchte, wozu er die Korrekturfunktion aufrufen muss. Ausgehend von Figur 29 bewegt sich der Benutzer durch Bedienung der Taste 4 schrittweise abwärts, bis er die Korrekturfunktion erreicht (siehe Figur 31). Durch Drücken der Bestätigungstaste 2 wird die fehlerhaft eingegebene " 9 " gelöscht (Figur 32).

Schließlich wird angenommen, dass der Benutzer den Nummernruf in dem sich aus Figur 32 ergebenden Zustand abbrechen möchte. Da die Abbruchfunktion in Abwärtsrichtung unmittelbar unter der Korrekturfunktion liegt, genügt eine einmalige Betätigung der Taste 4 um die Abbruchfunktion zu erreichen (Figur 33). Wird die Abbruchfunktion durch die Bestätigungstaste 2 bestätigt, so gelangte der Benutzer in den Ausgangszustand (Figur 34) von dem er die Nummernwahl gestartet hatte (Figur 14).

### Bezugszeichenliste

- 1: Lenkrad
- 2: Bestätigungstaste einer Bedieneinrichtung
- 3: Bedieneinrichtung in erster Richtung, Taste
- 4: Bedieneinrichtung entgegen erster Richtung, Taste
- 5: Anzeigeeinrichtung
- 6: Menüfeld
- 7: Menüfeld
- 8: Menüfeld
- 9: Menüfeld
- 10: Menüfeld
- 11: Umrahmung
- 12: Balken
- 13: Eingabefeld
- 14: Anzeigefeld
- 15: Bedieneinrichtung in erster Richtung, Taste
- 16: Bedieneinrichtung entgegen erster Richtung, Taste
- 17: Bedieneinrichtung in zweiter Richtung, Taste
- 18: Bedieneinrichtung entgegen zweiter Richtung, Taste
- 19: Bestätigungstaste einer Bedieneinrichtung
- 20: Zurück-Taste einer Bedieneinrichtung

## Patentansprüche

1. Vorrichtung in einem Fahrzeug mit einer Verarbeitungseinrichtung, mindestens einer Bedieneinrichtung (2,3,4) und einer Anzeigeeinrichtung (5) zur Darstellung von Menüfeldern (6 bis 10), wobei die Verarbeitungseinrichtung derart ausgebildet ist, dass bei Aktivierung eines Menüfeldes (7) ein Eingabe- und Anzeigefeld (13, 14) dargestellt wird, wobei im Eingabefeld (13) ein Zeichen einer Liste von mehreren Zeichen dargestellt ist und bei Betätigung der Bedieneinrichtung (3,4) das Zeichen durch ein anderes Zeichen ersetzt wird und durch Betätigung der Bedieneinrichtung (2) in das Anzeigefeld (14) übernommen wird und/oder eine Funktion über beziehungsweise in der Verarbeitungseinrichtung auslösbar ist oder ausgelöst wird,
**dadurch gekennzeichnet, dass**
auf der Anzeigeeinrichtung (5) mehrere Menüfelder untereinander angeordnet sind, bei Aktivierung eines Menüfeldes (7) dieses Menüfeld als Eingabe-und Anzeigefeld (13, 14) dargestellt wird, ohne dass sich die Lage des entsprechenden Menüfeldes (7) auf der Anzeigeeinrichtung (5) ändert, und
durch Betätigung mindestens einer Bedieneinrichtung (2) das Eingabe- und Anzeigefeld (13, 14) über ein Zeitintervall hervorgehoben wird, vorzugsweise durch einen farblich gekennzeichneten Rand (11).

2. Vorrichtung nach Anspruch 1, **dadurch gekennzeichnet, dass** durch Betätigung mindestens einer Bedieneinrichtung (2) die im Eingabefeld (13) angezeigten Zeichen nacheinander an nebeneinander liegende Stellen in das Anzeigefeld (14) übernehmbar sind.

3. Vorrichtung nach einem der Ansprüche 1 bis 2, **dadurch gekennzeichnet, dass** das Zeichen im Eingabefeld (13) ein alphanumerisches Zeichen und/oder ein einer Funktion zugeordnetes Piktogramm ist.

4. Vorrichtung nach Anspruch 3, **dadurch gekennzeichnet, dass** die im Eingabefeld (13) angezeigte Funktion eine Ausgabefunktion und/oder eine Abbruchfunktion (Figur 25) und/oder eine Korrekturfunktion beinhaltet.

5. Vorrichtung nach Anspruch 4, **dadurch gekennzeichnet, dass** sie derart ausgelegt ist, dass bei Anzeige der Funktion im Eingabefeld (13) und nach deren Bestätigung durch mindestens eine Bedieneinrichtung (2) das markierte Menüfeld (Figur 34) wieder sichtbar ist.

6. Vorrichtung nach Anspruch 4,**dadurch gekennzeichnet, dass** bei Anzeige der Funktion im Eingabefeld (13) und nach deren Aktivierung durch mindestens eine Bedieneinrichtung (2) der mit der Funktion verknüpfte Prozess durchgeführt wird und das markierte Menüfeld (7) sowie zumindest ein Teil der restlichen Menüfelder (8. bis 10) mit von der Verarbeitungseinrichtung ausgegebenen Informationen überschreibbar sind.

7. Vorrichtung nach Anspruch 4, **dadurch gekennzeichnet, dass** nach Übertragung einer sinnvollen Anzahl der möglichen Zeichen nacheinander in das Anzeigefeld (14) die Funktion selbsttätig auslösbar ist.

8. Vorrichtung nach einem der Ansprüche 4 bis 7, **dadurch gekennzeichnet, dass** durch eine hinreichend lange Betätigung durch mindestens einen Bedieneinrichtung (2) die Ausgabefunktion auslösbar ist.

9. Vorrichtung nach einem der Ansprüche 4 bis 8, **dadurch gekennzeichnet, dass** bei
Anzeige der Korrekturfunktion im Eingabefeld (13) und Betätigen der mindestens einen Bedieneinrichtung (2) die vorangegangene Operation,
insbesondere die Übertragung eines Zeichens, rückgängig gemacht wird.

10. Vorrichtung nach einem der vorangegangenen Ansprüche, **dadurch gekennzeichnet, dass** in dem Anzeigefeld (14) hinter dem letzten gültigen Zeichen ein Markierungszeichen dargestellt ist, welches die Position des nächsten in das Anzeigefeld übernehmbaren Zeichens markiert.

11. Vorrichtung nach einem der vorangegangenen Ansprüche, **dadurch gekennzeichnet, dass** ein Teil der Felder der Anzeigeeinrichtung (5) dauerhaft oder abhängig von der aktuellen Geschwindigkeit des Fahrzeugs für wesentliche Informationen reservierbar sind.

12. Vorrichtung nach einem der vorangegangenen Ansprüche, **dadurch gekennzeichnet, dass** auf der Anzeigeeinrichtung (5) weitgehend ausfüllende Hauptmenüfelder darstellbar sind, die durch die mindestens eine Bedieneinrichtung (2) (19) in vorgegebener Reihenfolge überschreibbar sind, wobei die Überschreibung derart geschieht, dass das vorangehende Hauptmenüfeld in einer Richtung aus der Anzeigeeinrichtung (5) verschwindet und das folgende Hauptmenüfeld in der gleichen Richtung in die Anzeigeeinrichtung hinein erscheint.

13. Vorrichtung nach Anspruch 12, **dadurch gekennzeichnet, dass** mindestens eine Bedieneinrichtung (3,4) (15,16,17,18 vorgesehen ist, durch welche die Hauptmenüfelder in einer ersten Richtung verschiebbar sind oder wahlweise in eine zweite Richtung oder eine dritte Richtung oder entgegengesetzte vierte Richtung verschiebbar sind.

14. Verfahren in einem Fahrzeug mit einer Verarbeitungseinrichtung, mindestens einer Bedieneinrichtung (2,3,4) und einer Anzeigeeinrichtung (5) zur Darstellung von Menüfeldern (6 bis 10), wobei
bei Aktivierung eines Menüfeldes (7) ein Eingabe- und Anzeigefeld (13, 14) dargestellt wird, wobei im Eingabefeld (13) ein Zeichen einer Liste von mehreren Zeichen dargestellt ist und bei Betätigung der Bedieneinrichtung (3,4) das Zeichen durch ein anderes Zeichen ersetzt wird und durch Betätigung der Bedieneinrichtung (2) in das Anzeigefeld (14) übernommen wird und/oder eine Funktion über beziehungsweise in der Verarbeitungseinrichtung auslösbar ist oder ausgelöst wird,
**dadurch gekennzeichnet, dass**
auf der Anzeigeeinrichtung (5) mehrere Menüfelder untereinander angeordnet sind, wobei bei Aktivierung eines Menüfeldes (7) dieses Menüfeld (7) als Eingabe- und Anzeigefeld (13, 14) dargestellt, ohne dass sich die Lage des entsprechenden Menüfeldes (7) auf der Anzeigeeinrichtung (5) ändert, und durch Betätigung mindestens einer Bedieneinrichtung (2) das Eingabe- und Anzeigefeld (13, 14) über ein Zeitintervall hervorgehoben werden, vorzugsweise durch einen farblich gekennzeichneten Rand (11).

15. Verfahren nach Anspruch 14, **dadurch gekennzeichnet, dass** durch Betätigung mindestens einer Bedieneinrichtung (2) die im Eingabefeld (13) angezeigten Zeichen nacheinander an nebeneinander liegende Stellen in das Anzeigefeld (14) übernommen werden.

16. Verfahren nach einem der Ansprüche 14 bis 15, **dadurch gekennzeichnet, dass** als
Zeichen im Eingabefeld (13) ein alphanumerisches Zeichen und/oder ein einer Funktion zugeordnetes Piktogramm verwendet wird.

17. Verfahren nach Anspruch 16, **dadurch gekennzeichnet, dass** die im Eingabefeld (13) angezeigte Funktion als Ausgabefunktion und/oder als Abbruchfunktion und/oder als Korrekturfunktion (Figur 26) verwendet wird.

18. Verfahren nach Anspruch 14, **dadurch gekennzeichnet, dass** bei Anzeige der Funktion im Eingabefeld (13) und nach deren Bestätigung durch mindestens eine Bedieneinrichtung (2) das markierte Menüfeld wieder sichtbar wird.

19. Verfahren nach Anspruch 14, **dadurch gekennzeichnet, dass** bei Anzeige der
Funktion im Eingabefeld (13) und nach deren Aktivierung, der mit der Funktion verknüpfte Prozess durchgeführt wird und das markierte Menüfeld (7
) sowie zumindest ein Teil der restlichen Menüfelder (8 bis 10) mit von der Verarbeitungseinrichtung ausgegebenen Informationen überschrieben werden.

20. Verfahren nach Anspruch 14, **dadurch gekennzeichnet, dass** nach Übertragung einer sinnvollen Anzahl der möglichen Zeichen nacheinander in das Anzeigefeld (14) die Funktion selbsttätig ausgelöst wird.

## Claims

1. Apparatus in a vehicle having a processing device, at least one operator control device (2, 3, 4) and a display device (5) for presenting menu panels (6 to 10), wherein the processing device is designed such that activation of a menu panel (7) prompts presentation of an input and display panel (13, 14), wherein the input panel (13) presents a character from a list of multiple characters and operation of the operator control device (3, 4) prompts the character to be replaced by another character and, as a result of operation of the operator control device (2), transferred to the display panel (14) and/or a function can be triggered or is triggered by means of or in the processing device,
**characterized in that**
the display device (5) holds a plurality of menu panels beneath one another, activation of a menu panel (7) prompts this menu panel to be presented as an input and display panel (13, 14) without the position of the relevant menu panel (7) on the display device (5) changing, and
operation of at least one operator control device (2) highlights the input and display panel (13, 14) over an interval of time, preferably by means of a colour-coded border (11).

2. Apparatus according to Claim 1, **characterized in that** operation of at least one operator control device (2) allows the characters displayed in the input panel (13) to be successively transferred to the display panel (14) at locations situated next to one another.

3. Apparatus according to either of Claims 1 and 2, **characterized in that** the character in the input panel (13) is an alphanumeric character and/or a pictogram associated with a function.

4. Apparatus according to Claim 3, **characterized in that** the function displayed in the input panel (13) contains an output function and/or a termination function (Figure 25) and/or a correction function.

5. Apparatus according to Claim 4, **characterized in that** it is designed such that display of the function in the input panel (13) and subsequent confirmation of said function by at least one operator control device (2) prompt the marked menu panel (Figure 34) to be visible again.

6. Apparatus according to Claim 4, **characterized in that** display of the function in the input panel (13) and subsequent activation of said function by at least one operator control device (2) prompt the process linked to the function to be performed and the marked menu panel (7) and at least one portion of the remainder of the menu panels (8 to 10) to be able to be overwritten with information that is output by the processing device.

7. Apparatus according to Claim 4, **characterized in that** following transmission of a meaningful number of possible characters in succession to the display panel (14) it is possible for the function to be triggered automatically.

8. Apparatus according to one of Claims 4 to 7, **characterized in that** sufficiently long operation by at least one operator control device (2) allows the output function to be triggered.

9. Apparatus according to one of Claims 4 to 8, **characterized in that** display of the correction function in the display panel (13) and operation of the at least one operator control device (2) prompt the preceding operation, particularly the transmission of a character, to be reversed.

10. Apparatus according to one of the preceding claims, **characterized in that** the display panel (14) presents a marker character behind the last valid character, which marker character marks the position of the next character that can be transferred to the display panel.

11. Apparatus according to one of the preceding claims, **characterized in that** a portion of the panels of the display device (5) can be reserved for crucial information permanently or on the basis of the current speed of the vehicle.

12. Apparatus according to one of the preceding claims, **characterized in that** the display device (5) can present extensively occupying main menu panels that can be overwritten by the at least one operator control device (2) (19) in a prescribed order, wherein the overwriting takes place such that the preceding main menu panel disappears from the display device (5) in one direction and the following main menu panel appears in the display device in the same direction.

13. Apparatus according to Claim 12, **characterized in that** at least one operator control device (3, 4) (15, 16, 17, 18) is provided that can displace the main menu panels in a first direction or can optionally displace them in a second direction or a third direction or an opposite fourth direction.

14. Method in a vehicle having a processing device, at least one operator control device (2, 3, 4) and a display device (5) for presenting menu panels (6 to 10), wherein activation of a menu panel (7) prompts presentation of an input and display panel (13, 14), wherein the input panel (13) presents a character from a list of multiple characters and operation of the operator control device (3, 4) prompts the character to be replaced by another character and, as a result of operation of the operator control device (2), transferred to the display panel (14) and/or a function can be triggered or is triggered by means of or in the processing device,
**characterized in that**
the display device (5) holds a plurality of menu panels beneath one another, activation of a menu panel (7) prompts this menu panel (7) to be presented as an input and display panel (13, 14) without the position of the relevant menu panel (7) on the display device (5) changing, and
operation of at least one operator control device (2) highlights the input and display panel (13, 14) over an interval of time, preferably by means of a colour-coded border (11).

15. Method according to Claim 14, **characterized in that** operation of at least one operator control device (2) allows the characters displayed in the input panel (13) to be successively transferred to the display panel (14) at locations situated next to one another.

16. Method according to either of Claims 14 and 15, **characterized in that** the character used in the input panel (13) is an alphanumeric character and/or a pictogram associated with a function.

17. Method according to Claim 16, **characterized in that** the function displayed in the input panel (13) is used as an output function and/or as a termination function and/or as a correction function (Figure 26).

18. Method according to Claim 14, **characterized in that** display of the function in the input panel (13) and subsequent confirmation of said function by at least one operator control device (2) prompt the marked menu panel to become visible again.

19. Method according to Claim 14, **characterized in that** display of the function in the input panel (13) and subsequent activation of said function prompt the process linked to the function to be performed and the marked menu panel (7) and also at least one portion of the remainder of the menu panels (8 to 10) to be overwritten with information that is output by the processing device.

20. Method according to Claim 14, **characterized in that** following transmission of a meaningful number of possible characters in succession to the display panel (14) the function is triggered automatically.

## Revendications

1. Dispositif dans un véhicule comprenant un dispositif de traitement, au moins un dispositif de commande (2, 3, 4) et un dispositif d'affichage (5) pour représenter des zones de menu (6 à 10), le dispositif de traitement étant configuré de telle sorte que lors de l'activation d'une zone de menu (7), un champ de saisie et d'affichage (13, 14) est représenté, un caractère d'une liste de plusieurs caractères étant représenté dans le champ de saisie (13) et, en cas d'actionnement du dispositif de commande (3, 4), le caractère étant remplacé par un autre caractère et transféré dans le champ d'affichage (14) en actionnant le dispositif de commande (2) et/ou une fonction pouvant être déclenchée ou étant déclenchée par le biais du dispositif de traitement ou dans celui-ci, **caractérisé en ce que**
plusieurs zones de menu sont disposées les unes au-dessous des autres sur le dispositif d'affichage (5), une zone de menu (7) est représentée sous la forme d'un champ de saisie et d'affichage (13, 14) lors de l'activation de cette zone de menu sans que la position de la zone de menu (7) correspondante sur le dispositif d'affichage (5) ne soit modifiée, et
l'actionnement d'au moins un dispositif de commande (2) met en valeur le champ de saisie et d'affichage (13, 14) pendant un intervalle de temps, de préférence par le biais d'un bord (11) à marquage en couleur.

2. Dispositif selon la revendication 1, **caractérisé en ce que** les caractères affichés dans le champ de saisie (13) peuvent être transférés les uns après les autres à des positions juxtaposées dans le champ d'affichage (14) en actionnant au moins un dispositif de commande (2).

3. Dispositif selon l'une des revendications 1 à 2, **caractérisé en ce que** le caractère dans le champ de saisie (13) est un caractère alphanumérique et/ou un pictogramme associé à une fonction.

4. Dispositif selon la revendication 3, **caractérisé en ce que** la fonction affichée dans le champ de saisie (13) comprend une fonction de publication et/ou une fonction d'interruption (figure 25) et/ou une fonction de correction.

5. Dispositif selon la revendication 4, **caractérisé en ce qu'**il est conçu de telle sorte que lors de l'affichage de la fonction dans le champ de saisie (13) et après sa confirmation par au moins un dispositif de commande (2), la zone de menu marquée (figure 34) devient de nouveau visible.

6. Dispositif selon la revendication 4, **caractérisé en ce que** lors de l'affichage de la fonction dans le champ de saisie (13) et après son activation par au moins un dispositif de commande (2), le processus lié à la fonction est exécuté et la zone de menu (7) marquée ainsi qu'au moins une partie des zones de menu (8 à 10) restantes peuvent être remplacées par l'écriture des informations délivrées par le dispositif de traitement.

7. Dispositif selon la revendication 4, **caractérisé en ce qu'**après la transmission d'un nombre significatif de caractères possibles les uns après les autres dans le champ d'affichage (14), la fonction peut se déclencher automatiquement.

8. Dispositif selon l'une des revendications 4 à 7, **caractérisé en ce que** la fonction de publication peut être déclenchée par un actionnement suffisamment long par au moins un dispositif de commande (2).

9. Dispositif selon l'une des revendications 4 à 8, **caractérisé en ce que** lors de l'affichage de la fonction de correction dans le champ de saisie (13) et l'actionnement de l'au moins un dispositif de commande (2), l'opération précédente, notamment la transmission d'un caractère, est annulée.

10. Dispositif selon l'une des revendications précédentes, **caractérisé en ce que** dans le champ d'affichage (14), derrière le dernier caractère valide, est représenté un caractère de marquage qui marque la position du prochain caractère pouvant être transféré dans le champ d'affichage.

11. Dispositif selon l'une des revendications précédentes, **caractérisé en ce qu'**une partie des champs du dispositif d'affichage (5) peut être réservée en permanence ou en fonction de la vitesse actuelle du véhicule pour des informations importantes.

12. Dispositif selon l'une des revendications précédentes, **caractérisé en ce que** sur le dispositif d'affichage (5) peuvent être représentées des zones de menu principal presque entièrement remplies, dont le contenu peut être remplacé dans un ordre prédéfini par l'au moins un dispositif de commande (2) (19), le remplacement s'effectuant de telle sorte que la zone de menu principal précédente disparaît dans une direction hors du dispositif d'affichage (5) et la zone de menu principal suivante apparaît dans le dispositif d'affichage dans la même direction.

13. Dispositif selon la revendication 12, **caractérisé en ce qu'**au moins un dispositif de commande (3, 4) (15, 16, 17, 18) est prévu, par le biais duquel les zones de menu principal peuvent être décalées dans une première direction ou, au choix, dans une deuxième direction ou dans une troisième direction ou encore dans une quatrième direction opposée.

14. Procédé dans un véhicule comprenant un dispositif de traitement, au moins un dispositif de commande (2, 3, 4) et un dispositif d'affichage (5) pour représenter des zones de menu (6 à 10), selon lequel
lors de l'activation d'une zone de menu (7), un champ de saisie et d'affichage (13, 14) est représenté, un caractère d'une liste de plusieurs caractères étant représenté dans le champ de saisie (13) et, en cas d'actionnement du dispositif de commande (3, 4), le caractère étant remplacé par un autre caractère et transféré dans le champ d'affichage (14) en actionnant le dispositif de commande (2) et/ou une fonction pouvant être déclenchée ou étant déclenchée par le biais du dispositif de traitement ou dans celui-ci, **caractérisé en ce que**
plusieurs zones de menu sont disposées les unes au-dessous des autres sur le dispositif d'affichage (5), une zone de menu (7) étant représentée sous la forme d'un champ de saisie et d'affichage (13, 14) lors de l'activation de cette zone de menu (7) sans que la position de la zone de menu (7) correspondante sur le dispositif d'affichage (5) ne soit modifiée, et l'actionnement d'au moins un dispositif de commande (2) mettant en valeur le champ de saisie et d'affichage (13, 14) pendant un intervalle de temps, de préférence par le biais d'un bord (11) à marquage en couleur.

15. Procédé selon la revendication 14, **caractérisé en ce que** les que caractères affichés dans le champ de saisie (13) sont transférés les uns après les autres à des positions juxtaposées dans le champ d'affichage (14) en actionnant au moins un dispositif de commande (2).

16. Procédé selon l'une des revendications 14 à 15, **caractérisé en ce que** le caractère utilisé dans le champ de saisie (13) est un caractère alphanumérique et/ou un pictogramme associé à une fonction.

17. Procédé selon la revendication 16, **caractérisé en ce que** la fonction affichée dans le champ de saisie (13) est utilisée comme fonction de publication et/ou comme fonction d'interruption et/ou comme fonction de correction (figure 26).

18. Procédé selon la revendication 14, **caractérisé en ce que** lors de l'affichage de la fonction dans le champ de saisie (13) et après sa confirmation par au moins un dispositif de commande (2), la zone de menu marquée devient de nouveau visible.

19. Procédé selon la revendication 14, **caractérisé en ce que** lors de l'affichage de la fonction dans le champ de saisie (13) et après son activation, le processus lié à la fonction est exécuté et la zone de menu (7) marquée ainsi qu'au moins une partie des zones de menu (8 à 10) restantes sont remplacées par l'écriture des informations délivrées par le dispositif de traitement.

20. Procédé selon la revendication 14, **caractérisé en ce qu'**après la transmission d'un nombre significatif de caractères possibles les uns après les autres dans le champ d'affichage (14), la fonction est déclenchée automatiquement.
